Europäisches Patentamt

European Patent Office

Office européen des brevets

(11) Numéro de publication: **0 347 314**
**A2**

## DEMANDE DE BREVET EUROPEEN

(21) Numéro de dépôt: **89401663.3**

(22) Date de dépôt: **14.06.89**

(51) Int. Cl.4: **G 01 N 27/46**

(30) Priorité: **15.06.88 FR 8808000**

(43) Date de publication de la demande:
**20.12.89 Bulletin 89/51**

(84) Etats contractants désignés:
**AT BE CH DE ES FR GB IT LI NL SE**

(71) Demandeur: **TECHNICATOME Société Technique pour l'Energie Atomique**
**29, rue de la Fédération**
**F-75015 Paris (FR)**

(72) Inventeur: **Francard, Jean-Louis**
**1, rue des Acacias**
**F-78470 Magny les Hameaux (FR)**

(74) Mandataire: **Mongrédien, André et al**
**c/o BREVATOME 25, rue de Ponthieu**
**F-75008 Paris (FR)**

(54) Procédé d'étalonnage automatique en ligne d'un capteur de mesure de la concentration d'une espèce électrochimique dissoute en phase liquide.

(57) Procédé d'étalonnage automatique en ligne d'un capteur électrochimique de mesure de la concentration d'une espèce électrochimique dissoute en phase liquide s'écoulant dans une conduite (5), caractérisé par les étapes suivantes :
- on place, en amont du capteur électrochimique (4), sur la conduite (5), un générateur (2) apte à délivrer des quantités étalon de l'espèce ;
- on place, sur ce même débit, entre le générateur (2) précédent et le capteur électrochimique, une ligne à retard (3) d'un volume donné de ce liquide ;
- on injecte successivement dans la conduite de liquide, à l'aide du générateur (2), deux bouffées de quantités connues de l'espèce électrochimique correspondant aux concentrations $C_1$ et $C_2$ dans le débit de liquide ;
- on détermine, à partir des indications du capteur électrochimique (4), le temps de retard introduit par la ligne à retard ;
- on calcule le coefficient de proportionnalité K de la concentration en l'espèce à l'indication du capteur en faisant le rapport de la différence des indications du capteur à la différence des concentrations $C_2-C_1$.

FIG. 2

EP 0 347 314 A2

Description

## PROCEDE D'ETALONNAGE AUTOMATIQUE EN LIGNE D'UN CAPTEUR DE MESURE DE LA CONCENTRATION D'UNE ESPECE ELECTROCHIMIQUE DISSOUTE EN PHASE LIQUIDE

La présente invention a trait au domaine de la mesure automatique en ligne, c'est-à-dire dans un liquide en cours d'écoulement dans une canalisation, de la concentration d'une espèce électrochimique dissoute.

De façon plus précise, la mesure continue et automatique de la concentration d'une telle espèce électrochimique est réalisée de façon connue à l'aide d'un capteur électrochimique du type cellule galvanique, qui délivre en sortie une intensité électrique proportionnelle à la concentration de l'espèce chimique dissoute dans le liquide avec lequel le capteur est en contact, au travers par exemple d'une membrane semi-perméable.

Malheureusement, et ceci est un phénomène bien connu de l'homme de métier, de tels capteurs de concentration présentent deux inconvénients majeurs qui diminuent leur intérêt en rendant peu fiables leurs indications :

Le premier inconvénient provient de l'instabilité du coefficient de proportionnalité K d'un tel appareil entre l'intensité électrique i qu'il délivre et la concentration de l'espèce en surveillance. Ce coefficient varie effectivement en fonction du temps et de la température, ce qui nécessite un réétalonnage permanent de l'appareil pour avoir des mesures parfaitement fiables.

Par ailleurs, un autre inconvénient de ce type d'appareil résulte du fait qu'il subit au cours du temps, par son principe même, une usure de ses électrodes qui le conduit à un état final dans lequel son indication est en permanence nulle, quelle que soit la concentration de l'espèce chimique surveillée. Cette propriété est très gênante, car une indication nulle du capteur laisse planer une incertitude due au fait qu'elle peut provenir aussi bien de l'absence de l'espèce recherchée que de l'usure définitive du capteur.

Pour pallier ce genre de difficulté, on peut recalculer périodiquement la valeur instantanée du coefficient de proportionnalité K du capteur, en utilisant la méthode des ajouts dosés. Celle-ci consiste à injecter en amont dans la canalisation parcourue par le liquide à surveiller, des quantités connues de l'espèce chimique à surveiller et à en déduire la valeur instantanée du coefficient K en étudiant le comportement de la réponse obtenue au niveau du capteur électrochimique. Une telle méthode toutefois nécessite l'emploi d'un débitmètre car l'injecteur utilisé, qui est en général une cellule électrolytique de Faraday, permet de connaître la quantité de l'espèce injectée et non sa concentration. Pour passer de la quantité à la concentration, il faut utiliser un débitmètre qui est un système peu fiable possédant notamment des systèmes chauffants ou des organes mobiles et des paliers, tels que des paliers de turbines ; c'est par ailleurs également un appareil coûteux qui représente à lui seul plus de 10% du prix total d'une installation de mesure automatique de la concentration en ligne.

Pour toutes ces raisons, il n'existe pas jusqu'à ce jour de procédé fiable de mesure en ligne de la concentration d'une espèce chimique dissoute qui permette l'étalonnage automatique du capteur électrochimique à des intervalles périodiques dans le temps.

La présente invention a précisément pour objet un procédé d'étalonnage automatique en ligne d'un tel capteur électrochimique qui résout, à l'aide de moyens simples, fiables et efficaces, le problème précédent.

Ce procédé d'étalonnage automatique en ligne d'un capteur électrochimique de mesure de la concentration d'une espèce électrochimique dissoute en phase liquide s'écoulant dans une conduite se caractérise par les étapes suivantes :

- on place, en amont du capteur électrochimique, sur la conduite parcourue par le débit de liquide à surveiller, un générateur apte à délivrer dans ce débit, des quantités étalon de l'espèce dont on veut mesurer la concentration ;

- on place, sur ce même débit, entre le générateur précédent et le capteur électrochimique, une ligne à retard d'un volume connu de ce liquide ;

- on injecte successivement dans le temps dans la conduite de liquide, à l'aide du générateur, deux bouffées de quantités connues de l'espèce électrochimique correspondant aux concentrations $C_1$ et $C_2$ dans le débit de liquide ;

- on détermine, à partir des indications du capteur électrochimique, le temps de retard introduit par la ligne à retard entre le générateur et le capteur pour chaque bouffée précédente, puis on en déduit le débit Q du liquide ;

on calcule le coefficient de proportionnalité K de la concentration en l'espèce à l'indication du capteur en faisant le rapport de la différence des indications du capteur à la différence des concentrations $C_2 - C_1$.

Comme on le voit ici, le procédé d'étalonnage objet de l'invention, qui fonctionne avec un capteur électrochimique du type galvanique susceptible d'une dérive de son coefficient de proportionnalité, permet de s'affranchir de l'emploi d'un débitmètre pour mesurer le débit Q du liquide dans la canalisation. A cet effet, le débitmètre est remplacé par la présence d'une ligne à retard "hydraulique", en d'autres termes une partie de conduite ajoutée entre le générateur et le capteur, en combinaison avec l'injection de deux concentrations $C_1$ et $C_2$ successives et de valeurs connues de l'espèce électrochimique à surveiller, dans le débit de liquide. La connaissance du débit Q est nécessaire pour déterminer la concentration corrrespondant aux masses injectées dans chacune des deux bouffées d'espèce électrochimique.

Bien entendu dans la pratique, les différentes étapes du procédé objet de l'invention se déroulent sous la commande d'un microprocesseur qui en contrôle les différentes séquences et effectue le calcul du coefficient de proportionnalité K de façon périodique ou à des instants choisis par l'utilisateur.

Le procédé d'étalonnage objet de l'invention utilisant d'une manière originale la méthode connue sous le nom des ajouts dosés, on commence d'abord par vérifier, avant l'injection à l'aide du générateur des deux bouffées de l'espèce électrochimique à surveiller, que le niveau de cette espèce dans le débit à surveiller est voisin de sa valeur normale. S'il n'en était pas ainsi, les quantités ainsi ajoutées par le générateur pourraient facilement passer inaperçues en présence par exemple d'une concentration anormalement élevée présente dans la canalisation au moment où l'on déclenche les séquences qui doivent conduire à la détermination réelle du coefficient K et au réétalonnage de l'appareil.

Selon l'invention, la ligne à retard hydraulique située entre le générateur et le capteur est constituée par une rallonge passive de la canalisation, par exemple sous la forme d'un tube en acier inoxydable de forme hélicoïdale et de volume interne proche de $100 \ cm^3$.

Selon une caractéristique plus précise du procédé d'étalonnage automatique objet de l'invention, le générateur est une cellule de Faraday à deux électrodes baignant dans le débit de liquide à surveiller et apte à libérer, dans ce liquide, des concentrations de l'espèce électrochimique de la forme $C = C_f \cdot I/Q$, formule dans laquelle $C_f$ est la constante de Faraday, corrigée du rendement de l'électrolyse, I l'intensité du courant injecté dans la cellule et Q le débit du liquide dans la conduite où il s'écoule ; le capteur électrochimique de mesure de la concentration de l'espèce électrochimique est une cellule galvanique à membrane en contact avec le liquide à surveiller, ayant deux électrodes baignant dans un électrolyte et délivrant un courant $i = KC$, K étant la constante de proportionnalité de l'appareil dont on vérifie la stabilité et C la valeur de la concentration de l'espèce électrochimique dans le débit de liquide à surveiller.

On détermine expérimentalement le retard T introduit par la ligne à retard entre l'époque d'injection d'une espèce par la cellule et la détection de celle-ci par le capteur en fonction du débit Q du liquide dans la conduite, la fonction $T = f(1/Q)$ étant par définition linéaire.

On injecte successivement dans la cellule de Faraday deux niveaux de courants $I_1$ et $I_2$, libérant chacun dans la conduite les concentrations d'espèce électrochimique supplémentaires $C_1$ et $C_2$ telles que $C_1 = C_f I_1/Q$ et $C_2 = C_f I_2/Q$.

On repère les époques $T_A$ et $T_C$ de cessation respectives de ces niveaux de courant $I_1$ et $I_2$, les époques respectives $T_B$ et $T_D$ de débuts de décroissance du courant i correspondant à la sortie de la cellule galvanique ainsi que les valeurs $i_1$ et $i_2$ de i à ces mêmes instants $T_B$ et $T_D$.

On calcule le débit Q dans la conduite au moment de l'expérience en reportant sur la droite $T = f(1/Q)$ la valeur moyenne :

$$\frac{(T_B - T_A) + (T_D - T_C)}{2}$$

On en déduit la valeur actuelle K de la constante de proportionnalité de la cellule par la formule :

$$K = \frac{Q}{C_f} \times \frac{i_2 - i_1}{I_2 - I_1}$$

On voit que, conformément à l'invention, on choisit, pour mesurer le retard apporté dans l'écoulement du fluide par la ligne à retard introduite entre le générateur et le capteur, de préférence les instants de décrochements des intensités i à la sortie de la cellule galvanique, ceux-ci étant particulièrement nets et plus faciles à repérer que les instants de début de croissance de ce même courant i. Pour calculer le débit de la phase liquide dans la conduite au moment de l'étalonnage à l'aide de la fonction $T = f(1/Q)$ qui est linéaire et que l'on détermine expérimentalement, on a recours, pour augmenter la précision de la mesure, à la moyenne des retards constatés à partir de chacun des deux niveaux de courant $I_1$ et $I_2$ adressés à la cellule de Faraday. Selon l'invention, c'est bien l'emploi de ces deux injections, correspondant à des concentrations connues et contrôlées de l'espèce électrochimique à surveiller dans la conduite où s'écoule la phase liquide à surveiller, qui permet d'éviter l'emploi d'un débitmètre pour passer des quantités de l'espèce libérée dans la cellule de Faraday à la concentration qu'elles représentent une fois injectées dans l'écoulement liquide de la conduite.

Selon un mode de mise en oeuvre préféré du procédé objet de l'invention, l'espèce électrochimique à surveiller est l'oxygène en solution dans de l'eau en écoulement, la cellule de Faraday étant de forme cylindrique à électrodes concentriques en acier inoxydable et la cellule galvanique à membrane ayant des électrodes respectives en plomb et en argent.

Enfin, le procédé objet de l'invention est généralisable à la surveillance de la concentration de toute espèce électrochimique dissoute dans de l'eau en écoulement, dès lors qu'elle est susceptible de provoquer des réactions de type électrochimique. A titre d'exemple, la présente invention s'applique parfaitement à un procédé de dosage de la concentration des chlorures dans l'eau dans lequel le générateur d'ions $Cl^-$ dans l'eau en écoulement est une cellule d'électrolyse ayant ses électrodes respectivement en Cu et en alliage

EP 0 347 314 A2

Ag-AgCl, le capteur électrochimique ayant une électrode spécifique de la mesure de la concentration du chlore.

De toute façon, l'invention sera mieux comprise à la lecture qui suit de la description d'un exemple de réalisation, description donnée à titre illustratif et non limitatif et faite en se référant aux figures 1 à 6 sur lesquelles :

la figure 1 représente le schéma de principe de l'appareillage nécessaire à la mise en oeuvre du procédé objet de l'invention,

- la figure 2 représente un mode de mise en oeuvre pratique de cet appareillage,

- la figure 3 représente les intensités électriques parcourant respectivement le générateur d'espèce chimique (figure 3a) et le capteur (figure 3b) durant un cycle d'étalonnage automatique du capteur,

- la figure 4 représente la droite d'étalonnage du retard apporté par la ligne à retard en fonction de l'inverse du débit Q dans la canalisation,

la figure 5 explique une particularité intéressante de l'invention lorsque l'on détecte de l'oxygène dissous dans de l'eau pouvant contenir de l'ammoniaque à titre d'impureté,

- la figure 6 est un schéma de principe de l'appareil utilisé pour la mise en oeuvre du procédé objet de l'invention, lorsque, pour fonctionner de façon automatique, on pilote l'ensemble des séquences nécessaires à l'aide d'un microprocesseur.

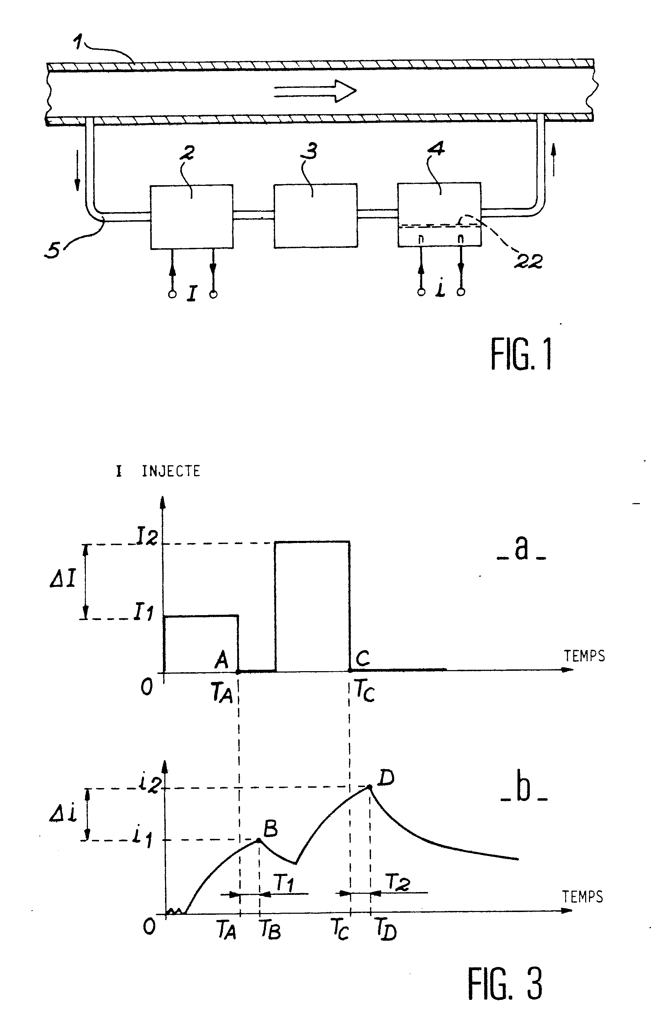

Dans l'exemple représenté figure 1, on a schématisé en 1 une canalisation parcourue par un débit de liquide dans lequel se trouve dissoute une espèce électrochimique dont on veut mesurer en permanence la concentration.

L'appareillage nécessaire pour mettre en oeuvre le procédé d'étalonnage automatique en ligne objet de l'invention comporte essentiellement un générateur 2 de cette espèce électrochimique, une ligne à retard "hydraulique" 3 et un capteur 4. Dans l'exemple de la figure 1, le générateur 2, la ligne à retard 3 et le capteur 4 sont montés en série sur une dérivation 5 de débit Q du liquide parcourant la canalisation 1, mais il est bien évident que, selon les cas d'application, on pourrait tout aussi bien les mettre en série sur la canalisation 1 elle-même.

Le générateur 2 est un générateur du type électrochimique, le plus souvent une cellule de Faraday, apte à déverser dans la canalisation 5 des quantités contrôlées de l'espèce électrochimique dont on surveille la concentration, et ce sous l'effet de la commande d'un courant I qui lui est injecté. La ligne à retard "hydraulique" 3 est une conduite passive, d'une certaine longueur, destinée simplement à allonger artificiellement le trajet de la phase liquide dans la dérivation 5 entre la sortie du générateur 2 et l'entrée du capteur 4. Le capteur 4 est une cellule galvanique comportant deux électrodes, une anode et une cathode plongeant dans un électrolyte séparé par une membrane semi-perméable 22 de la phase liquide qui s'écoule dans la dérivation 5. L'espèce électrochimique dont on surveille la concentration doit être susceptible d'une part de traverser cette membrane et, d'autre part, ayant ainsi pénétré dans l'électrolyte, de provoquer des réactions électrochimiques avec l'une des électrodes pour modifier l'équilibre électrochimique de la cellule et lui faire émettre un courant d'électrons qui se traduit à l'extérieur par un courant i accessible à la mesure. De telles cellules galvaniques sont parfaitement connues de l'homme de métier et l'on sait que leur réponse en courant, i, est proportionnelle à la concentration de l'espèce électrochimique véhiculée par le liquide en contact duquel elle se trouve. En d'autres termes, ce capteur 4 fonctionne comme une pile électrique qui délivre à l'extérieur un courant $i = KC$, C étant la valeur de la concentration de l'espèce électrochimique surveillée dans le débit Q de liquide de la dérivation 5 et K étant la constante de proportionnalité du capteur 4.

Malheureusement, la constante K est instable et évolue dans le temps sous l'effet d'une part des variations de température et d'autre part de l'état d'usure des électrodes du capteur 4. C'est précisément la raison pour laquelle il est nécessaire de recourir à un procédé d'étalonnage tel que celui de la présente invention si l'on veut obtenir, automatiquement, des résultats fiables qui permettent de s'affranchir des variations de la constante K.

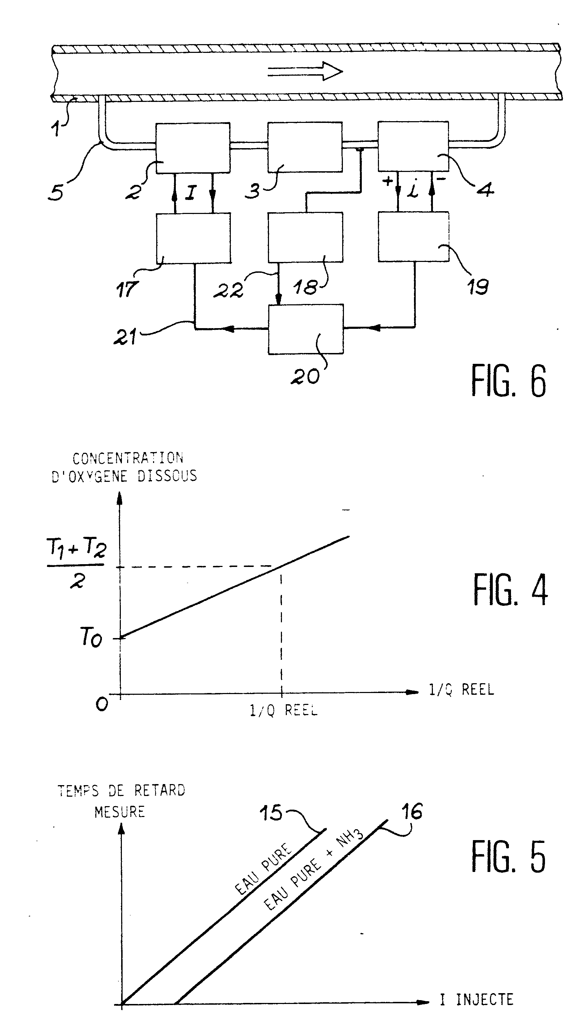

Pour mettre ce procédé en oeuvre, on délivre successivement dans la conduite 5 à l'aide du générateur 2 deux bouffées de l'espèce électrochimique à surveiller, à des concentrations connues et repérables. On mesure ensuite les variations du courant de i consécutives à l'arrivée, avec le retard introduit par la ligne 3, des deux bouffées précédentes sur le capteur 4 et on en déduit, comme expliqué à l'aide des figures 3 et 4 qui suivent la valeur instantanée de la constante K qui permet ainsi d'accéder à la vraie valeur de la concentration de l'espèce électrochimique surveillée.

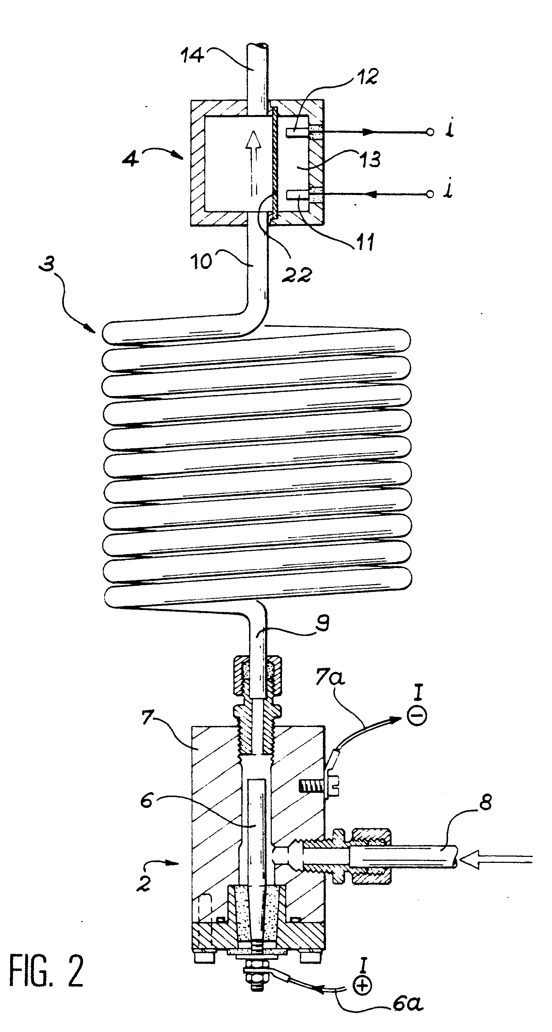

La figure 2 montre en détail un exemple de réalisation pratique de l'appareillage de la figure 1 sur lequel on retrouve le générateur 2, la ligne à retard 3 et le capteur 4. Le générateur 2 est une cellule de Faraday de forme cylindrique possédant deux électrodes concentriques 6 et 7. L'électrode centrale 6 utilisée comme anode est réalisée en nickel pur pour limiter les effets de corrosion. Le courant électrique d'intensité I est injecté à la cellule par les conducteurs 6a pour l'anode centrale 6 et 7a pour la cathode 7. L'entrée de la phase liquide 8 reçoit le débit Q de la dérivation 5 de la figure 1, lequel débit ressort dans la conduite 9 du générateur 2. Ce débit de liquide pénètre ensuite dans la ligne à retard hydraulique 3, qui n'est qu'une canalisation passive constituée d'un tube en acier inoxydable enroulé de façon hélicoïdale à la manière d'un serpentin, comme on le voit sur la figure et ayant, dans l'exemple décrit, un volume interne voisin de 100 cm$^3$. Le liquide qui s'écoule dans l'installation pénètre ensuite par la conduite 10 dans le capteur 4 dont la partie active comporte les deux électrodes 11 et 12 baignant dans un électrolyte 13. Cet électrolyte 13 est séparé par une membrane 22 de la phase liquide à surveiller qui pénètre dans le capteur 4 par la canalisation 10 et en sort par la canalisation 14.

Dans un exemple de mise en oeuvre du procédé objet de l'invention, particulièrement intéressant, on cherche à doser en permanence la concentration de l'oxygène dissous dans un écoulement d'eau et le générateur 2 est une cellule de Faraday qui provoque, sous l'influence du courant I qui la parcourt, l'électrolyse de l'eau faiblement conductrice de la dérivation 5 en produisant, conformément à la loi de Faraday, une quantité reproductible d'oxygène dissous à l'anode 6 selon l'équation :

$$H_2O \rightarrow 1/2\ O_2 + 2H^+ + 2e^-$$

Les schémas des figures 3a et 3b qui se lisent parallèlement en fonction du temps placé en abscisses, représentent respectivement, pour la figure 3a, les échelons de courant I que l'on injecte dans le générateur 2, et pour la figure 3b, la variation du courant i qui en résulte à la sortie du capteur 4.

Comme on le voit sur la figure 3a, l'obtention des deux bouffées successives de l'espèce électrochimique en question est obtenue en injectant dans le générateur 2 deux niveaux d'intensité $I_1$ et $I_2$ séparés par une période de repos. La figure 3b montre l'évolution consécutive du courant i à la sortie du capteur 4, le déphasage entre les fronts de montée et de descente des échelons de courant $I_1$ et $I_2$ et les discontinuités du courant i étant évidemment provoquées par la ligne à retard hydraulique 3 qui introduit un temps de transfert T entre l'émission d'une bouffée par le générateur 2 et sa détection par le capteur 4. Expérimentalement, la demanderesse a constaté qu'il était beaucoup plus facile de travailler sur les fronts de descente de l'intensité injectée I et par conséquent sur les décrochements de la courbe i de la figure 3b pour mettre en évidence avec précision ce retard. Dans les deux figures 3a et 3b ce retard est mesuré deux fois, une première fois par la différence $T_B - T_A = T_1$ et une deuxième fois par la différence $T_D - T_C = T_2$. les valeurs de $T_1$ et $T_2$ sont évidemment très voisines et ne diffèrent que par les instabilités de fonctionnement de l'appareil, si toutefois la concentration de l'espèce ne varie pas dans le débit liquide en cours d'étalonnage. Pour travailler de façon commode, le procédé d'étalonnage adopte comme valeur moyenne du temps de retard T introduit par la ligne 3, la valeur moyenne $T_1 + T_2/2$.

Comme on l'a vu précédemment, le générateur 2 délivre des quantités de l'espèce électrochimique connues et proportionnelles au courant I, mais pour atteindre la valeur de la concentration à l'instant de la mesure il est nécessaire de connaître le débit puisque la concentration C est égale au quotient de la masse de l'espèce délivrée par le débit Q de la phase liquide.

Conformément à l'invention, on réalise cette mesure grâce à un étalonnage préalable de l'appareil, qui permet de tracer la fonction linéaire du temps de retard mesuré T en fonction de l'inverse du débit 1/Q dans la dérivation 5. La droite représentant cette fonction linéaire est visible sur la figure 4. On peut voir d'ailleurs qu'elle ne passe pas exactement par l'origine O des coordonnées, mais que son ordonnée à l'origine a une valeur $T_0$. Cette valeur correspond au temps $T_0$ qui est nécessaire à l'espèce électrochimique pour traverser la membrane du capteur et est par conséquent indépendante du débit lui-même. Autrement dit, même pour un débit théoriquement infini, il existe déjà un temps de retard $T_0$. En plaçant sur la droite de la figure 4 la valeur moyenne du retard T mesuré d'après les courbes des figures 3a et 3b, c'est-à-dire la valeur $T_1 + T_2/2$, on obtient la valeur de 1/Q permettant de connaître le débit Q réel dans la dérivation 5. Ceci est l'un des avantages essentiels de l'invention que l'on doit à la combinaison des effets de la double bouffée d'espèce injectée et de la ligne à retard hydraulique.

On travaille sur la courbe de la figure 3b, plutôt sur les décrochages de début de décroissance que sur les décrochages à la croissance, car le décrochage de décroissance est beaucoup plus net et facile à repérer. Ceci résulte du fait qu'on n'est plus gêné à ce niveau par le bruit de fond inhérent à tout appareil de mesure puisqu'on travaille sur des intensités i qui se situent très au-dessus de ce bruit de fond.

Les concentrations de l'espèce électrochimique ajoutées par le générateur 2 pendant l'injection des deux échelons de courant $I_1$ et $I_2$ sont approximativement du même ordre de grandeur que la concentration C que l'on mesure et par conséquent aussi, le plus souvent, égales entre elles, de façon à perturber le moins possible le système et à bénéficier d'un retour à l'équilibre d'une durée raisonnable après une phase d'étalonnage. On peut également noter qu'il n'est pas inutile de vérifier que les temps $T_1$ et $T_2$ sont très voisins car, si tel n'était pas le cas, ceci signifierait qu'il s'est produit pendant le cycle d'étalonnage en cours une variation de la concentration C de l'espèce électrochimique dans la conduite de base 1.

Enfin, on notera, parmi les avantages du procédé objet de l'invention, que la méthode de mesure utilisée ne nécessite pas de déterminer le zéro de la concentration, puisque le capteur galvanique 4 ne donne d'électrons, et par conséquent de courant i, que s'il détecte la présence de l'espèce électrochimique à laquelle il est conçu pour répondre.

Les mesures électriques décrites précédemment en se référant aux figures 3 et 4 permettent de déterminer la valeur réelle K de la constante de proportionnalité du capteur 4 au moment de l'étalonnage en déterminant d'abord les concentrations supplémentaires $C_1$ et $C_2$ d'espèces électrochimiques introduites par le générateur 2 durant les échelons de courant $I_1$ et $I_2$ qui s'écrivent :

$$C_1 = C_f.I_1/Q,$$
$$C_2 = C_f.I_2/Q,$$

formules dans lesquelles $C_f$ est la constante de Faraday, corrigée du rendement de l'électrolyse.

Le temps de retard T introduit par la ligne à retard 3 et choisi, comme on la vu, égal à la valeur moyenne :

$$\frac{(T_B - T_A) + (T_D - T_C)}{2}$$

permet de déterminer la valeur du débit Q puis la valeur réelle actuelle de la constante K de proportionnalité du capteur 4 en appliquant la formule :

$$K = \frac{i_2 - i_1}{c_2 - c_1} = \frac{Q}{c_f} \times \frac{i_2 - i_1}{I_2 - I_1}$$

formule dans laquelle $i_2$ et $i_1$ sont les valeurs, repérées sur la figure 3b, du courant i du capteur 4 au moment des points des décrochements B et D visibles sur cette figure 3b.

Dans un exemple particulièrement intéressant de la mise en oeuvre du procédé objet de l'invention, celui-ci est appliqué à la surveillance de la concentration en oxygène dissous dans de l'eau s'écoulant dans une canalisation. Le générateur 2 est une cellule de Faraday qui produit tout simplement l'électrolyse de l'eau et délivre par conséquent des bouffées d'oxygène dans la dérivation 5 en quantité proportionnelle au courant I qui le parcourt et le capteur 4 est une cellule galvanique dont les électrodes sont respectivement en plomb et en argent.

On peut remarquer d'ailleurs que le procédé selon l'invention est toujours applicable, même si cette eau n'est pas pure et contient par exemple des corps étrangers qui sont décomposés dans la cellule de Faraday 2 en consommant des électrons susceptibles de perturber la mesure. C'est le cas, en particulier, lorsque cette eau contient comme impureté du gaz ammoniac $NH_3$ dissous, et l'on voit, en se référant à la figure 5, que la présence d'ammoniaque dans l'eau ne fait que déplacer parallèlement à elle-même la droite de concentration d'oxygène dissout en fonction de l'intensité injectée de 15 et 16, en conservant la même pente. Cette remarque permet de noter au passage un avantage non négligeable de la présence du procédé objet de l'invention.

A titre d'exemple des ordres de grandeurs, les quantités d'oxygène injectées par le générateur 2 sont de l'ordre du millième de celle qui conduirait à la saturation de l'eau circulant dans la canalisation 1, l'étalonnage du capteur 4 dure plusieurs minutes et la perte de temps réel, c'est-à-dire la durée pendant laquelle le capteur 4 est aveugle à une forte augmentation réelle lors d'un étalonnage, ne dépasse pas quelques dizaines de secondes.

Bien entendu, le procédé objet de l'invention peut s'appliquer au dosage d'autres espèces chimiques que l'oxygène, comme par exemple le dosage de la concentration des chlorures dans l'eau. A cet effet, le générateur d'ions Cl⁻ dans l'eau en écoulement est une cellule d'électrolyse dont les électrodes sont respectivement en cuivre et en alliage Ag-AgCl, et le capteur électrochimique 4 est choisi comme ayant bien entendu une électrode spécifique de l'ion chlore.

En se référant enfin à la figure 6, on décrira le schéma de principe d'une installation automatique susceptible de mettre en oeuvre à l'aide d'un microprocesseur le procédé d'étalonnage objet de l'invention.

Sur cette figure 6, on retrouve, munis des mêmes nombres de référence, les éléments de la figure 1 auxquels se trouvent ajoutés un générateur d'intensité 7 engendrant le courant I destiné à alimenter la cellule 2, un thermomètre 18 surveillant en permanence la température du liquide s'écoulant dans la dérivation 5 et un galvanomètre 19 qui mesure la valeur i du courant du capteur 4. Un microprocesseur 20 reçoit en permanence des indications du galvanomètre 19 et du thermomètre 18 pour calculer la valeur de la concentration de l'espèce électrochimique surveillée par le capteur 4 dans la conduite 5 ; ce même microprocesseur 20 commande, à des instants programmés d'avance par l'utilisateur, le générateur d'intensité 17 par l'intermédiaire de la ligne 21 en vue de la commande de la cellule de Faraday 2 et de l'injection des bouffées d'espèces électrochimiques nécessaires à la mise en route d'un cycle d'étalonnage du capteur 4. Une fois la valeur de la constante K calculée à partir des valeurs $I_1$, $I_2$, $i_1$, $i_2$ et Q, le microprocesseur 20 intègre la nouvelle valeur de cette constante K pour effectuer la surveillance permanente de la concentration décelée par le capteur 4.

**Revendications**

1. Procédé d'étalonnage automatique en ligne d'un capteur électrochimique de mesure de la concentration d'une espèce électrochimique dissoute en phase liquide s'écoulant dans une conduite (5), caractérisé par les étapes suivantes :

- on place, en amont du capteur électrochimique (4), sur la conduite (5) parcourue par le débit de liquide à surveiller, un générateur (2) apte à délivrer dans ce débit, des quantités étalon de l'espèce dont on veut mesurer la concentration ;

- on place, sur ce même débit, entre le générateur (2) précédent et le capteur électrochimique, une ligne à retard (3) d'un volume donné de ce liquide ;

- on injecte successivement dans le temps dans la conduite de liquide, à l'aide du générateur (2), deux bouffées de quantités connues de l'espèce électrochimique correspondant aux concentrations $C_1$ et $C_2$ dans le débit de liquide ;

- on détermine, à partir des indications du capteur électrochimique (4), le temps de retard introduit par la ligne à retard entre le générateur et le capteur pour chaque bouffée précédente, puis on en déduit le débit Q du liquide ;

- on calcule le coefficient de proportionnalité K de la concentration en l'espèce à l'indication du capteur en faisant le rapport de la différence des indications du capteur à la différence des concentrations $C_2 - C_1$.

2. Procédé d'étalonnage automatique selon la revendication 1, caractérisé en ce que :

- le générateur est une cellule de Faraday (2) à deux électrodes baignant dans le débit de liquide à surveiller et apte à libérer, dans ce liquide, des concentrations de l'espèce électrochimique de la forme $C = C_f.I/Q$, formule dans laquelle $C_f$ est la constante de Faraday, corrigée du rendement de l'électrolyse, I l'intensité du courant injecté dans la cellule et Q le débit du liquide dans la conduite où il s'écoule ;

- le capteur électrochimique (4) de mesure de la concentration de l'espèce électrochimique est une cellule galvanique à membrane en contact avec le liquide à surveiller, ayant deux électrodes (11, 12) baignant dans un électrolyte et délivrant un courant $i = KC$, K étant la constante de proportionnalité de l'appareil dont on vérifie la stabilité et C la valeur de la concentration de l'espèce électro-chimique dans le débit de liquide à surveiller ;

- on détermine expérimentalement le retard T introduit par la ligne à retard (3) entre l'époque d'injection d'une espèce par la cellule et la détection de celle-ci par le capteur en fonction du débit Q du liquide dans la conduite, la fonction $T = f(1/Q)$ étant par définition linéaire ;

- on injecte successivement dans la cellule de Faraday deux niveaux de courants $I_1$ et $I_2$, libérant chacun dans la conduite les concentrations d'espèce électrochimique supplémentaires $C_1$ et $C_2$ telles que $C_1 = C_f I_1/Q$ et $C_2 = C_f I_2/Q$ ;

- on repère les époques $T_A$ et $T_C$ de cessation respectives de ces niveaux de courant $I_1$ et $I_2$, les époques respectives $T_B$ et $T_D$ de débuts de décroissance du courant i correspondant à la sortie de la cellule galvanique ainsi que les valeurs $i_1$ et $i_2$ de i à ces mêmes instants $T_B$ et $T_D$ ;

- on calcule le débit Q dans la conduite au moment de l'expérience en reportant sur la droite $T = f(1/Q)$ la valeur moyenne :

$$\frac{(T_B - T_A) + (T_D - T_C)}{2}$$

- on en déduit la valeur actuelle K de la constante de proportionnalité de la cellule par la formule :

$$K = \frac{Q}{C_f} \times \frac{i_2 - i_1}{I_2 - I_1}$$

3. Procédé d'étalonnage automatique selon la revendication 2, caractérisé en ce que l'espèce électrochimique surveillée est l'oxygène en solution dans de l'eau en écoulement, la cellule de Faraday étant de forme cylindrique à électrodes concentriques (6, 7) en acier inoxydable et la cellule galvanique à membrane ayant des électrodes respectives en plomb et en argent.

4. Procédé d'étalonnage automatique selon l'une quelconque des revendications 1 à 3, caractérisé en ce que la ligne à retard située entre le générateur et le capteur est un tube en acier inoxydable de forme hélicoïdale et de volume interne proche de 100 cm$^3$.

5. Application du procédé d'étalonnage selon l'une quelconque des revendications 1 et 2 au dosage de la concentration des chlorures dans l'eau, caractérisé en ce que le générateur d'ions Cl$^-$ dans l'eau en écoulement est une cellule d'électrolyse ayant ses électrodes respectivement en Cu et en alliage Ag-AgCl, le capteur électrochimique ayant une électrode spécifique de la mesure de la concentration du chlore.

7

FIG. 1

FIG. 3

FIG. 2

FIG. 6

CONCENTRATION
D'OXYGENE DISSOUS

$\dfrac{T_1 + T_2}{2}$

$T_0$

1/Q REEL

1/Q REEL

O

FIG. 4

TEMPS DE RETARD
MESURE

15

16

EAU PURE

EAU PURE + NH₃

I INJECTE

FIG. 5